# EUROPÄISCHE PATENTANMELDUNG

(11) **EP 1 271 345 A1**
(43) Veröffentlichungstag der Anmeldung: **02.01.2003**
(21) Anmeldenummer: 01115473.9
(22) Anmeldetag: 27.06.2001
(51) Int. Cl.: G06F 17/30

(54) **Telekommunikationssystem zum Bereitstellen vertonter Artikel in einem Datennetz**

(71) Anmelder: econe AG, 63303 Dreieich (DE)
(72) Erfinder: Laber, Olaf, 63303 Dreieich (DE); Rabeler, Frank, 63303 Dreieich (DE)
(74) Vertreter: Becker Kurig Straus

(57) **Zusammenfassung**

Es wird ein Telekommunikationssystem zum Bereitstellen vertonter Artikel in einem Datennetz vorgestellt. Bei diesem werden ausgewählte Artikel aus Zeitungen und Zeitschriften vertont und eine Datei, welche mindestens einen der vertonten Artikel umfaßt, in ein elektronisches Datennetz eingespeist. Über dieses kann die eingespeiste Datei abgerufen werden.
Weiterhin wird ein System zum Betreiben des Telekommunikationssystems, eine Vorrichtung zur Nutzung desselben und ein Datenträger zur Verwendung mit der Vorrichtung beschrieben.

## Beschreibung

Die Erfindung betrifft ein Telekommunikationssystem zur Bereitstellung vertonter Zeitschriftenartikel, ein Verfahren zum Betreiben eines solchen Telekommunikationssystems, eine Vorrichtung zur Nutzung desselben und einen Datenträger zur Verwendung mit dem erfindungsgemäßen Telekommunikationssystem.

Die heutige Medienlandschaft bietet dem Nutzer nahezu uneingeschränkte Informationsmöglichkeiten. Tageszeitungen informieren über aktuelle Ereignisse; unzählige Fachzeitschriften geben dem Leser die Gelegenheit, sich gezielt zu einem Fachgebiet Informationen und Meinungen einzuholen. Durch die Wahl beim Kauf der Zeitung bzw. Zeitschrift und anschließend durch Auswahl der einzelnen Artikel kann der Nutzer von sich aus, das heißt aktiv, bestimmen, zu welchem Thema er Informationen erhalten möchte .

Beim Kauf einer Zeitung bzw. einer Zeitschrift kann der Nutzer es allerdings nicht vermeiden, daß das erworbene Medium auch eine Reihe von Artikeln enthält, die ihn nicht interessieren. Ein großer Nachteil bei der Nutzung gedruckter Medien ist außerdem, daß das Lesen der Artikel die ungeteilte Aufmerksamkeit des Lesers verlangt. So kann beispielsweise der Fahrer eines Kraftfahrzeuges während der Fahrt keine Artikel lesen. Fahrtzeiten, die einen beträchtlichen Teil des Tages ausmachen können, stellen somit "tote Zeiten" dar. Rundfunkempfänger in Kraftfahrzeugen sind kein befriedigender Ersatz. Zwar kann man während der Fahrt Nachrichtensendungen oder Musik hören, doch hat der Hörer nicht die Option, das Programm bzw. die Datei aktiv zu gestalten. Der passive Konsum eines Programmes jedoch ist unbefriedigend und führt unter Umständen dazu, daß der Fahrer ständig den Sender wechselt.

Aufgabe der vorliegenden Erfindung ist es daher, ein System zu schaffen, welches einem Nutzer, dessen Beschäftigung bzw.Tätigkeit ein gezieltes Lesen nicht zuläßt, ermöglicht, sich gezielt, seinen Wünschen entsprechend zu informieren.

Diese Aufgabe wird durch ein Telekommunikationssystem mit den Merkmalen des Anspruchs 1 gelöst.

Ein Verfahren zum Betreiben des erfindungsgemäßen Telekommunikationssystems ist durch die Merkmale des Anspruchs 8 gegeben. Ein Computerprogram zur Durchführung des Verfahrens ergibt sich aus Anspruch 12, ein Computerprogrammprodukt aus Anspruch 13.

Eine Vorrichtung zur Nutzung des erfindungsgemäßen Telekommunikationssystems ergibt sich aus einer Vorrichtung gemäß Anspruch 14.

Vorteilhafte Ausgestaltungen ergeben sich aus den Unteransprüchen.

Der Betreiber des Telekommunikationssystems wählt bestimmte Nachrichtenartikel aus aktuellen Zeitungen und Zeitschriften aus, vertont diese und stellt sie in einem Datennetz bereit. Der Kunde des Systems bzw. Dienstes kann über das Netz ein Programm bzw. eine Datei, welche mindestens einen vertonten Artikel umfaßt und vom Betreiber ins Datennetz eingespeist wurde, über dieses abrufen. Er kann gezielt die Artikel wählen, die ihn interessieren und auch während einer Tätigkeit, die das Lesen nicht zuläßt, diese sich anhören. Auf diese Weise kann der Nutzer bisher "tote Zeiten" - beispielsweise beim Autofahren - sinnvoll nutzen. Nur Artikel, die ihn wirklich interessieren, werden von ihm über das Datennetz abgerufen.

Das Programm kann auch Musiktitel und Werbung umfassen, wobei der Kunde auch die für ihn interessanten Kategorien an Werbung einstellen kann, so daß er sich individuell sein Informations- und Unterhaltungsprogramm zusammenstellen kann. Der Kunde hört auf diese Weise nur Musik, die ihm gefällt und Werbung, die für ihn von Interesse ist und wird diese deshalb auch eher akzeptieren.

Bevorzugt wird das Programm nach Vorgaben des Nutzers zusammengestellt. Dies hat für ihn den Vorteil, daß er sich nicht immer darüber informieren muß, welche Artikel und Musiktitel ihm momentan zur Verfügung stehen. Das Programm wird dem Kunden nach dessen Wünschen und Interessen zusammengestellt.

Der Kunde kann sich das aufgerufene Programm sofort anhören oder auf einem Datenträger speichern, um es sich beliebig oft unabhängig von einem Zugang zum Datennetz anzuhören.

Als Datennetz dient bevorzugt ein elektronisches Kommunikationsnetz, insbesondere das Internet. Der Umgang mit diesem Datennetz ist vielen Personen bereits vertraut. Diese Personen verfügen auch schon über einen Internetzugang. Für sie ist es leicht möglich, den angebotenen Dienst in Anspruch zu nehmen.

Das erfindungsgemäße System dient zur Umsetzung der Erfindung. Das System weist eine Datenbank, welche ausgewählte vertonte Artikel enthält, und eine Verbindungsschnittstelle zwischen der Datenbank und dem Datennetz auf. Über die Verbindungsschnittstelle kann ein Programm, welches mindestens einen der vertonten Artikel aus der Datenbank enthält, mit einem geeigneten Mittel in das Datennetz eingespeist werden.

Bevorzugt ist die Datenbank auf einem Datenträger gespeichert, der mit einer elektronischen Rechenanlage verbunden ist. Das Mittel zum Einspeisen des Programmes ist dann ein auf der Rechenanlage installiertes Computerprogramm.

Das Programm kann auch Musiktitel und Werbung umfassen.

Bevorzugt ist das in das Datennetz eingespeiste Programm nach Vorgaben des Nutzers, nämlich des Empfängers des eingespeisten Programmes, zusammengestellt.

Von besonderem Vorteil ist, wenn das System eine graphische Benutzeroberfläche aufweist. Diese ist bevorzugt ebenfalls auf der elektronischen Rechenanlage installiert, und ermöglicht es dem Nutzer, sich anhand einer Übersicht das gewünschte Programm zusammenzustellen. Mit Hilfe der graphischen Benutzeroberfläche kann ein zukünftiger Kunde sich bei dem erfindungsgemäßen Dienst registrieren lassen und die Vorgaben, mit Hilfe derer seine Programme zusammengestellt werden, dem Betreiber des Dienstes übermitteln.

Von Vorteil ist, wenn als Datennetz das Internet dient. Die graphische Benutzeroberfläche befindet sich dann auf derHomepage des Anbieters.

In einer vorteilhaften Ausgestaltung der Erfindung besteht als Verbindungsschnittstelle ein direkter Zugang zum Internet. Auf diese Weise ist sichergestellt, daß die gewünschten Daten schnell übermittelt werden können.

Bevor der Kunde den Dienst nutzt, muß er sich registrieren lassen. Dies ist sowohl aus juristischen Gründen als auch aus Gründen der Abrechnung notwendig. Das Registrieren kann in folgenden Schritten ablaufen:
- Der Kunde wählt die entsprechende Seite der Homepage des Anbieters.
- Der Kunde macht Angaben zu dem von ihm gewünschten Abrechnungsmodalitäten und zu seiner Bankverbindung.
- Der Kunde akzeptiert die juristisch relevanten Belange.
- Der Kunde wählt die für ihn interessante Kombination an Werbe- und Querschnitts-Themen (dieses Profil ist für den Kunden jederzeit änderbar).
- Der Kunde bestimmt sein Musikprofil (auch dieses ist jederzeit änderbar).
- Der Kunde ist berechtigt den Dienst jederzeit abzurufen.
- Die Registrierung ist widerrufbar und das Teilnehmerverhältnis endet mit Ende des nächsten Abrechnungszeitraumes.

Die erfindungsgemäße Vorrichtung zur Nutzung des Telekommunikationsdienstes weist eine Verbindungsschnittstelle zu einem Datennetz, ein Mittel zum Abrufen einer in das Datennetz eingespeisten Datei, die zumindest einen vertonten Artikel umfaßt, und ein Mittel zur akustischen Wiedergabe des abgerufenen Programmes auf.

Bevorzugt umfaßt die Vorrichtung weiterhin ein Datensichtgerät und Dateneingabemittel, welche eine Kommunikation zwischen Nutzer und Anbieter des Telekommunikationsdienstes erleichtern.

Als Datensichtgerät und Dateneingabemittel dienen ein Monitor und eine Tastatur einer elektronischen Rechenanlage. Auf der Rechenanlage ist das Mittel zum Abrufen des eingespeisten Programmes in Form eines Computerprogrammes installiert.

Das abgerufene Programm kann zumindest einen Musiktitel und Werbung umfassen.

Von Vorteil ist es, wenn die erfindungsgemäße Vorrichtung einen Datenträger aufweist. Auf diesem kann das abgerufene Programm gespeichert werden. Als Datenträger kann zum Beispiel die Festplatte der elektronischen Rechenanlage dienen.

Ist der Datenträger eine CD-ROM, ein MP3-Player oder vergleichbares Gerät, kann das abgerufene Programm bzw. die Datei von einem beliebigen CD-ROM-Laufwerk abgespielt und akustisch wiedergegeben werden.

Das abgerufene Programm bzw. die Datei ist vorzugsweise nach Vorgaben des Nutzers zusammengestellt.

Ein ISDN-Modem erlaubt aufgrund der hohen Datenübertragungsrate eine schnelle Übertragung der in das Datennetz eingespeisten Daten.

In einer vorteilhaften Ausgestaltung der Erfindung ist die Verbindungsschnittstelle ein Mobilfunknetzmodem, beispielsweise ein GSM-Modem. Der Zugang zum Datennetz erfolgt dann über das Modem und eine Schnittstelle zwischen Mobilfunknetz und Datennetz. Auf diese Weise kann der Nutzer an beliebigen Orten das gewünschte Programm abrufen. Für den Zugang zum Mobilfunknetz kann er beispielsweise ein Mobilfunktelefon verwenden. Die empfangenen Daten werden auf einem Datenträger gespeichert oder direkt akustisch wiedergegeben. Diese besondere Ausgestaltung eignet sich vor allem für den Einsatz in einem Kraftfahrzeug. In diesem kann die vorhandene Antenne als Verbindungsschnittstelle zum Mobilfunknetz und die mit einem Rundfunkempfänger verbundenen Lautsprecher als Mittel zur akustischen Wiedergabe des abgerufenen Programmes dienen.

Als Datennetz dient bevorzugt das Internet.

Zum Abrufen des Dienstes gibt es mehrere Möglichkeiten. Der Dienst kann beispielsweise über einen PC genutzt werden. Der Abruf des Dienstes ist somit mit gegebener Technologie möglich. Der Kunde nutzt seinen PC um den Dienst in Anspruch zu nehmen. Das individuell ausgewählte und zusammengestellte Programm wird via "Download" auf den PC geladen und kann dann vom Kunden entweder direkt mit den Multi-Media-Einrichtungen des PC's gehört werden oder auf CD (oder vergleichbarem Medium) gebracht und so einer mobilen Nutzung zugeführt werden.

Der Kunde kann aber auch spezielle Internet-Geräte einsetzen. Diese Geräte haben direkten Zugang zu Internet-Diensten und verfügen über einen Speicher, auf den das Programm via "Download" geladen wird. Bei den Geräten handelt es sich um solche, die in Aufbau und Funktionsweise einem Walkman oder Diskman ähneln, oder eine entsprechende Funktionalität befindet sich direkt im Autoradio.

In jedem Fall ist die mobile Nutzung für den Kunden gegeben.

Der Abruf kann mit einem Abonnement erfolgen. Die Idee hierbei ist, Großkunden die Möglichkeit zum Abonnement zu geben und sie damit in die Lage zu versetzen, ihren Kunden gegenüber die Service-Palette weiter zu steigern. Potentielle Großkunden sind u.a.:
- Telefongesellschaften
- Fluggesellschaften und die Bahn
- Kaufhäuser
- Bars

Diese Zielgruppen unterscheiden sich in der Art ihres Service-Angebotes.

Eine Abrechnung der erbrachten Dienstleistungen erfolgt zwischen drei Partnern:
- Kunde (Großkunde, Einzelkunde)
- Verlag (bzw. GEMA)
- Werbeindustrie

Die Abrechnungsformen betreffend muß grundsätzlich zwischen einer dynamischen und statischen Form unterschieden werden. Bei der dynamischen Form orientiert sich der Rechnungsbetrag direkt an der Zahl der abgerufenen Artikel und der eingespielten Werbung. Die statische Form sieht vor, daß ein monatlicher oder artikelbezogener Fixbetrag erhoben wird.

Auf dem Datenträger zur Verwendung mit der erfindungsgemäßen Vorrichtung sind in voneinander abgetrennten Bereichen Informationsdaten, Musikdaten und Werbedaten gespeichert. Die Bereiche können sequentiell abrufbar sein. Eine besondere Ausgestaltung des Datenträgers sieht vor, daß ein beliebiger Zugriff auf die Bereiche möglich ist.

Ein möglicher Ablauf des Dienstes ist nachfolgend aufgeführt:
- Ausgewählte Artikel von Magazinen werden, zeitnah zu ihrem Erscheinen in der Presse, vertont und im Internet bereitgestellt.
- Musik wird explizit und/oder nach Genre zur Auswahl bereitgestellt.
- Unterhaltungsbeiträge und Berichte von Radiostationen und Nachrichtensendern werden bereitgestellt.
- Kunden lassen sich kostenlos für den Abruf des Angebotes registrieren.
- Kunden rufen vertonte Artikel, Musik, Berichte und Unterhaltungsbeiträge via Internet ab und nehmen somit den Dienst in Anspruch, wofür sie eine geringe Gebühr entrichten.
- Die Lieferung an den Kunden wird individuell zusammengestellt, um Werbung ergänzt und Übergänge zwischen Artikeln, Beiträgen und Musik werden "instant" moderiert.
- Eine Abrechnung mit den Kunden erfolgt monatlich oder nach gesonderter Vereinbarung.

Die Erfindung wird anhand der beigefügte Zeichnungen näher erläutert. Es zeigen:
- Figur 1: ein erfindungsgemäßes System zum Betreiben eines Telekommunikationsdienstes;
- Figur 2: eine Ausführungsform einer erfindungsgemäßen Vorrichtung zur Nutzung des Telekommunikationsdienstes;
- Figur 3: eine weitere Ausführungsform der erfindungsgemäßen Vorrichtung.

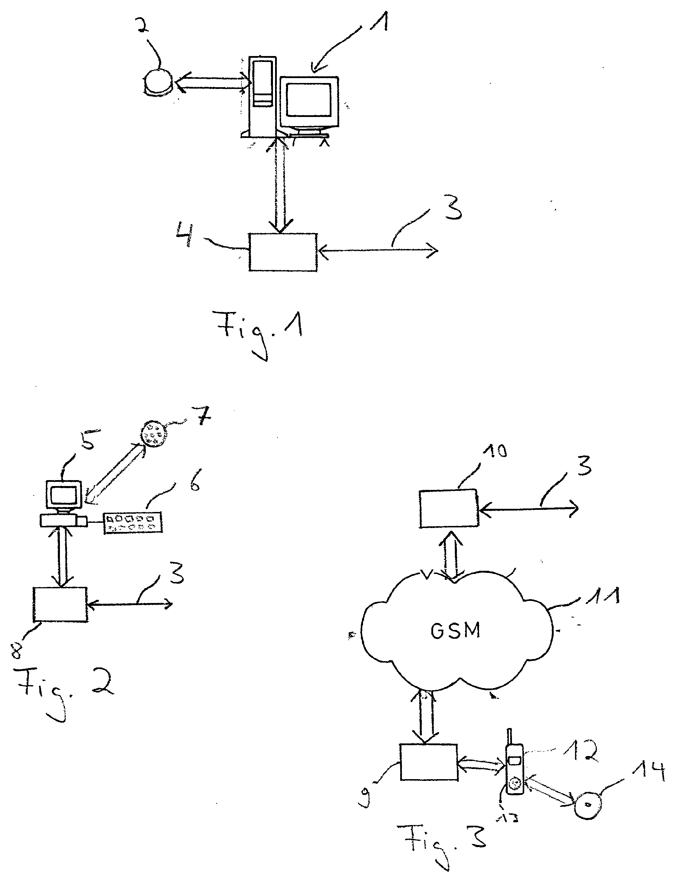

Das in Figur 1 dargestellte System umfaßt eine elektronische Rechenanlage 1. Eine Datenbank, welche ausgewählte vertonte Artikel enthält, ist auf einer Festplatte 2 der elektronischen Rechenanlage 1 abgelegt. Die in der Datenbank gespeicherten Daten werden im Internet 3 bereitgestellt. Als Verbindungsschnittstelle 4 zwischen Datenbank und dem Internet besteht ein direkter Zugang zum Internet 3. Als Mittel zum Einspeisen eines Programmes dient ein auf der Festplatte 2 installiertes Computerprogramm.

In Figur 2 ist eine Vorrichtung zur Nutzung des Telekommunikationsdienstes dargestellt. Diese umfaßt eine elektronische Rechenanlage mit einen Monitor 5 als Datensichtgerät, eine Tastatur 6 als Dateneingabemittel und einem Lautsprecher 7 zur akustischen Wiedergabe des abgerufenen Programmes. Als Verbindungsschnittstelle zum Internet 3 dient ein Modem 8 (aus Gründen der Übertragungsgeschwindigkeit vorzugsweise ein ISDN-Modem), welches eine hohe Datenübertragungsrate gewährleistet. Als Mittel zum Abrufen des ins Internet 3 eingespeisten Programmes dient ein Computerprogramm. Die elektronische Rechenanlage ermöglicht dem Nutzer, mit dem Anbieter des Dienstes zu kommunizieren. Er kann sich zum Beispiel registrieren lassen, ein neues Profil übermitteln oder auch gezielt bestimmte Artikel abrufen. Hierbei hilft ihm die graphische Benutzeroberfläche des Anbieters.

Eine weiter Ausführungsform der Vorrichtung ist in Figur 3 dargestellt. Bei dieser erfolgt der Zugang zum Internet 3 über ein Mobilfunknetzmodem 9 und einer Schnittstelle 10 zwischen dem GSM-Netz 11 und dem Internet 3. Der Zugang zum GSM-Netz 11 geschieht mit einem Mobilfunktelefon 12. Ein Lautsprecher 13 des Mobilfunktelefons 12 dient zu akustischen Wiedergabe des abgerufenen Programmes. Das Programm kann auch auf mittels eines mit dem Mobilfunktelefon 12 verbundenen CD-Laufwerkes auf eine CD-ROM 14 übertragen werden. Mit der beschriebenen Vorrichtung kann an beliebigen Orten das individuell zusammengestellte Programm abgerufen werden.

Der beschriebene Telekommunikationsdienst stellt einen innovativen Internetdienst dar, bei dem sich jeder Kunde individuell sein Informations- und Unterhaltungsprogramm zusammenstellen kann. Der Informationsteil ist die konsequente Umsetzung eines Audio-Zeitschriftenladens im Internet. Ausgewählte Artikel aus tages-, wochen- oder monatsaktuellen Magazinen werden vertont im Internet angeboten. Der Unterhaltungsteil wird je nach Vorlieben des Kunden gemischt. Das gesamte Programm kann durch eine professionelle "instant" gesprochene, also vorvertonte, Moderation ergänzt werden.

Mit diesem Telekommunikationsdienst wird sowohl den aktuellen Kundenbedürfnissen, als auch den zukünftigen Entwicklungen am Hardwaremarkt Rechnung getragen. Der Dienst hilft, bisher "tote Zeiten" individuell zu nutzen. Der Kunde kann das Internet entkoppelt vom PC nutzen und ganz gezielt die Vorzüge dieses Netzes einsetzen. Weiterhin hat der Kunde die Möglichkeit, Informationen auf Artikel-Ebene und nicht auf Magazin-Ebene zu kaufen. Er ist in der Lage, seine Auswahl aus einem breiten Angebot zu ziehen und muß dafür nur eine Rechnung begleichen. Insbesondere für blinde oder schwer sehbehinderte Menschen ergeben sich durch diesen Telekommunikationsdienst völlig neue Perspektiven.

Der beschriebene Telekommunikationsdienst berücksichtigt neue Entwicklungen im Bereich des Internet. Noch heute ist der PC das Vehikel für den Weg ins Internet. Der Kunde geht ins Internet, welches vergleichbar einem gigantischen Kaufhaus mit Irrgarten-Ambiente ist. Zukünftige Entwicklungen, wie der erfindungsgemäße Telekommunikationsdienst, schaffen neue Voraussetzungen für den Umgang und damit die Nutzung des Internet:
- Der Kunde nutzt das Internet, d. h. nicht die Neugierde, sondern der Service ist das Ziel.
- Der Kunde will die für ihn interessanten Aspekte des Internet nutzen, er wird gezielt auf Dienste im Internet zugreifen wollen.
- Der Kunde wird das Internet überall nutzen wollen: im Auto, beim Joggen und im Cafe unabhängig vom PC.
- Der Kundenbedarf an Spezial-Geräten für das Internet wird drastisch steigen.

Aber nicht nur für die Kunden ergeben sich erhebliche Vorteile. Für Verlage, welche die vertonten Artikel zur Verfügung stellen, wird eine völlig neue Zweitvermarktungschance bereitgestellt. Der Verlag kann sich dadurch sowohl innovative Vermarktungschancen öffnen, ohne eigene größere Investitionen, als auch neue Kundengruppen gewinnen. Ohne daß eine neue Form der Debitorenbuchhaltung aufgebaut werden müßte, kann der zusätzliche Umsatz erzielt werden.

Radiostationen erhalten für ihre Spots, Jokes, Nachrichten und Berichte eine Zweitvermarktungschance. Wird der Sender genannt, steigt dadurch auch seine Popularität.

Die werbetreibende Industrie erschließt sich mit Hilfe des Telekommunikationsdienstes ein neues großes Kundenpotential, ohne selbst investieren zu müssen. Das finanzielle Risiko ist gering; die Zielgruppengenauigkeit ist sehr hoch. Durch die genaue Kenntnis der Zielgruppe sind auch völlig neue Werbekonzepte denkbar.

Die Werbung wird in Bereiche bzw. Themen klassifiziert. Diese sind beispielsweise:
- Mode
- Reise
- Auto
- Essen
- Gesundheits- und Schönheitspflege
- Haushalt/Heimwerker
- EDV
- Geld

Der Kunde kann sein Werbeprofil selbst definieren. So kommt dem Kunden nur Werbung zu, welche seinen Interessen entspricht. Mittels der Werbung kann der Dienst kostengünstig oder sogar kostenlos für den Kunden angeboten werden, was Attraktivität und Vielfalt des Angebots weiter wachsen läßt.

Die Musikbranche profitiert ebenfalls, da über einen neuen Weg im Internet Musik verkauft werden kann und dabei liefer-genau abgerechnet wird.

Ein Gesamtablauf wird nachfolgend beschrieben:
- Die Verlage vertonen Artikel und liefern sie als Datei an den Anbieter des Telekommunikationsdienstes, oder der Anbieter vertont selbst. Musik Label liefern Musik. Der Anbieter stellt diese Dateien über das Internet zur Verfügung.
- Die Werbeindustrie liefert dem Anbieter Audio-Werbespots als Datei. Der Anbieter klassifiziert die Werbung und speichert sie entsprechend ab.
- Der Einzelkunde registriert sich beim Anbieter unter Angabe seiner Interessenschwerpunkte, des von ihm gewünschten Werbeprofils sowie seiner Musikvorlieben und seiner Bankverbindung.
- Mit Großkunden werden entsprechende Rahmenverträge geschlossen.
- Der Kunde ruft via Internet Artikel oder andere Audio-Informationsangebote und Musik ab.
- Gemäß dem Profil des Kunden wird das Programm zusammengestellt.
- Das Programm ist bereit zum Abrufen und wird geliefert. Der Rechnungsstellung erfolgt gemäß den mit den Kunden getroffenen Vereinbarungen.

Der Kunde kann die Höhe des Rechnungsbetrages beeinflussen, indem er das Verhältnis zwischen Unterhaltung, Information und Werbung vorgibt. Je höher der Anteil der Werbung ist, umso geringer ist der von ihm zu entrichtende Betrag. So ist es auch möglich, den Dienst kostenlos für den Kunden anzubieten.

## Patentansprüche

1. Telekommunikationssystem, aufweisend
- eine Datenbank, welche ausgewählte vertonte Nachrichtenartikel enthält;
- eine Verbindungsschnittstelle (4) zwischen der Datenbank und einem Datennetz, und
- ein Mittel, welches eine Datei, die mindestens einen der vertonten Titel umfaßt, in das Datennetz einspeist.

2. System nach Anspruch 1, **dadurch gekennzeichnet, daß** die Datenbank auf einem mit einer elektronischen Rechenanlage (1) verbundenen Datenträger gespeichert und das Mittel zum Einspeisen der Datei ein auf der Rechenanlage (1) installiertes Computerprogramm ist.

3. System nach Anspruch 1 oder Anspruch 2, **dadurch gekennzeichnet, daß** die eingespeiste Datei mindestens einen Musiktitel umfaßt.

4. System nach einem der Ansprüche 1 bis 3, **dadurch gekennzeichnet, daß** die eingespeiste Datei Werbung umfaßt.

5. System nach einem der Ansprüche 1 bis 4, **dadurch gekennzeichnet, daß** die in das Datennetz eingespeiste Datei nach Vorgaben eines Nutzers zusammengestellt ist.

6. System nach einem der Ansprüche 1 bis 5, **gekennzeichnet durch** eine graphische Benutzeroberfläche.

7. System nach einem der Ansprüche 1 bis 6, **dadurch gekennzeichnet, daß** als Datennetz das Internet (3) dient.

8. Verfahren zum Betrieb eines Telekommunikationssystem nach Anspruch 1, zum Bereitstellen vertonter Artikel in einem Datennetz, bei dem ausgewählte Nachrichten-Artikel vertont werden und eine Datei, welches mindestens einen der vertonten Artikel umfaßt, in ein elektronisches Datennetz eingespeist wird, so daß die Datei über das Datennetz abgerufen werden kann.

9. Verfahren nach Anspruch 8, **dadurch gekennzeichnet, daß** die eingespeiste Datei mindestens einen Musiktitel umfaßt.

10. Verfahren nach Anspruch 8 oder 9, **dadurch gekennzeichnet, daß** die eingespeiste Datei Werbung umfaßt.

11. Verfahren nach einem der Ansprüche 8 bis 10, **dadurch gekennzeichnet, daß** die eingespeiste Datei nach Vorgaben eines Nutzers zusammengestellt wird.

12. Computerprogram, welches Programmcodemittel aufweist zum Durchführen eines Verfahrens nach einem der Ansprüche 8-11.

13. Computerprogrammprodukt, welches ein gespeichertes Programm nach einem Verfahren der Ansprüche 8-11 aufweist, das bei Ausführung des Programms auf einem Rechner das Verfahren durchführt.

14. Vorrichtung zur Nutzung eines Telekommunikationssystems gemäß einem der Ansprüche 1 bis 7, mit
- einer Verbindungsschnittstelle zu einem Datennetz ,
- einem Mittel zum Abrufen einer in das Datennetz eingespeisten Datei, die zumindest einen vertonten Artikel umfaßt, und
- einem Mittel zur akustischen Wiedergabe der abgerufenen Datei.

15. Vorrichtung nach Anspruch 14, **gekennzeichnet durch** ein Datensichtgerät und Dateneingabemittel.

16. Vorrichtung nach Anspruch 15, **dadurch gekennzeichnet, daß** als Datensichtgerät und Dateneingabemittel ein Monitor (5) und eineTastatur (6) einer elektronischen Rechenanlage dienen, auf welcher das Mittel zum Abrufen der eingespeisten Datei in Form eines Computerprogrammes installiert ist.
